# EUROPÄISCHE PATENTSCHRIFT

(11) **EP 2 358 977 B1**
(45) Veröffentlichungstag und Bekanntmachung des Hinweises auf die Patenterteilung: **19.09.2018**
(21) Anmeldenummer: 09753113.1
(22) Anmeldetag: 18.11.2009
(51) Int. Cl.: F01D 5/08

(54) **GEKÜHLTE SCHAUFEL FÜR EINE GASTURBINE**
COOLED VANE FOR A GAS TURBINE
AUBE REFROIDIE POUR UNE TURBINE À GAZ

(30) Priorität: 26.11.2008 CH 18462008
(43) Veröffentlichungstag der Anmeldung: 24.08.2011
(73) Patentinhaber: Ansaldo Energia IP UK Limited, London W1G 9DQ (GB)
(72) Erfinder: RIAZANTSEV, Sergei, CH-5608 Stetten (CH); WILHELM, Thomas, CH-8032 Zürich (CH)
(74) Vertreter: Bernotti, Andrea
(86) Internationale Anmeldenummer: PCT/EP2009/065353
(87) Internationale Veröffentlichungsnummer: WO 2010/060835

(56) Entgegenhaltungen:
- EP-A2- 1 772 592
- GB-A- 1 561 229
- US-A- 3 749 514
- US-A- 3 918 835
- US-A- 4 784 573
- US-A- 4 940 388
- US-B2- 7 264 445
- SOURMAIL T: "Coatings of Turbine Blades" UNIVERSITY OF CAMBRIDGE WEBSITE 5. Juni 2006 (2006-06-05), Seiten 1-29, XP7908701 Cambridge, UK Gefunden im Internet: URL:http://www.msm.cam.ac.uk/phase-trans/2 003/Superalloys/coatings/index.html> [gefunden am 2009-06-04] in der Anmeldung erwähnt

## Beschreibung

### Technisches Gebiet

Die vorliegende Erfindung bezieht sich auf das Gebiet der Gasturbinen. Sie betrifft eine Schaufel für eine Gasturbine gemäss dem Oberbegriff des Anspruchs 1.

### Stand der Technik

Gekühlte Schaufeln für Gasturbinen, bei denen die im Inneren des Schaufelblattes in gefalteten Kühlkanälen geführte Kühlluft durch eine am Schaufelschaft angeordnete Zuführbohrung zugeführt wird, sind beispielsweise aus der US-B2-7,264,445 bekannt. Derartige Zuführungen können auch seitlich am Schaft in den Aussenraum münden (siehe z.B. die US-A-4,940,388).

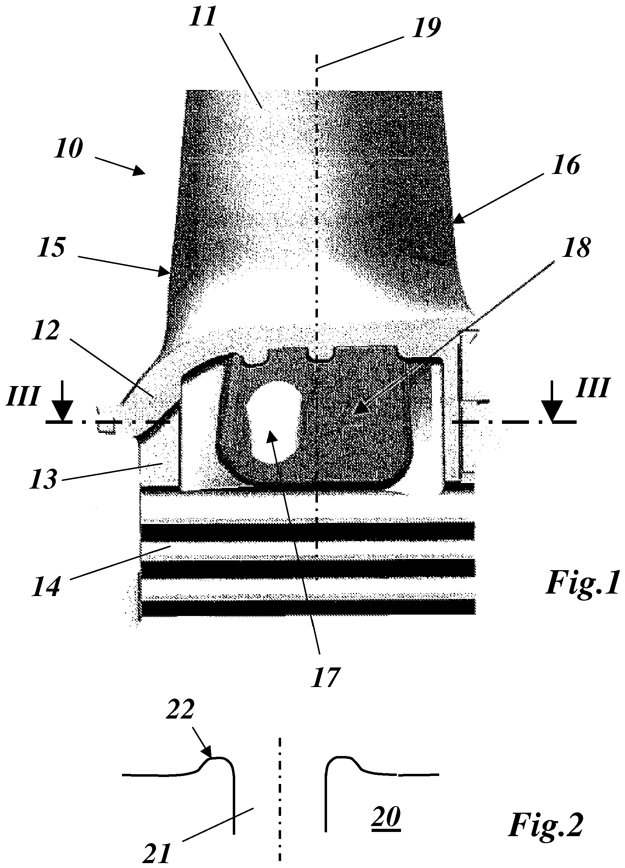

Die Zuführbohrungen im Schaft der Schaufel erzeugen an den Kanten mechanische Spannungskonzentrationen, welche die Lebensdauer der Schaufel beeinträchtigen können. In hoch belasteten Schaufeln, wie sie beispielsweise bei Turbinen grosser Flugzeuge eingesetzt werden, werden deshalb Massnahmen getroffen, um diese Spannungsspitzen an den Kanten der Bohrungsöffnungen zu reduzieren. Eine solche Massnahme besteht beispielsweise darin, gemäss Fig. 2 um die Zuführbohrung 21 herum am Schaft eine die Öffnung umgebende Wulst vorzusehen. Eine derartige Schaufel ist in einem Artikel von T. Sourmail, "Coatings for Turbine Blades", University of Cambridge, (Internet: http://www.msm.cam.ac.uk/phase-trans/2003/Superalloys/coatings/index.html) im Abschnitt "Coatings" auf S. 6 abgebildet.

Die spannungsreduzierende Wulst um die Öffnung der Zuführbohrung führt zu einer Erhöhung der Lebensdauer, hat jedoch wegen ihrer Lokalisierung praktisch keine Auswirkung auf das Schwingungsverhalten der Schaufel. Es wäre jedoch wünschenswert, eine zusätzliche Verbesserung im Schwingungsverhalten zu erzielen.

EP 1 772 592 A2 offenbart eine Schaufel für Gasturbinen mit den Merkmalen des Oberbegriffs des Anspruchs 1.

### Darstellung der Erfindung

Hier will die Erfindung Abhilfe schaffen. Es ist daher Aufgabe der Erfindung, eine gekühlte Schaufel für eine Gasturbine zu schaffen, bei der über die Reduzierung Lebensdauer-mindernder Spannungsspitzen auch Verbesserungen im Schwingungsverhalten erzielt werden.
Die Aufgabe wird durch die Gesamtheit der Merkmale des Anspruchs 1 gelöst. Wesentlich für die Erfindung ist, dass die Mittel zur Reduzierung der Spitzen bei mechanischen Spannungen ein über die unmittelbare Umgebung der Zuführbohrung hinausreichendes, im flächiges oder im Wesentlichen flächiges Versteifungselement umfassen. Mit der flächenhaften Ausdehnung des Versteifungselementes wird nicht nur die lokale Spannung am Rand der Bohrungsöffnung reduziert, sondern zugleich das Schwingungsverhalten der Schaufel verbessert, weil durch das Versteifungselement die natürliche Frequenz des ersten Klappenschwingungsmodes der Schaufel erhöht wird.
Die erfindungsgemäße Schaufel ist dadurch gekennzeichnet, dass an der Grenze zwischen dem Schaft und dem Schaufelblatt eine Plattform ausgebildet ist, und das Versteifungselement unmittelbar an die Unterseite der Unterseite der Plattform anschliesst und auf der gegenüberliegenden Seite abgerundete Ecken aufweist.
Eine Ausgestaltung der Erfindung ist dadurch gekennzeichnet, dass der Schaft eine konkave und eine konvexe Seite aufweist, und dass die Zuführbohrung auf der konvexen Seite des Schaftes in den Aussenraum mündet.
Eine andere Ausgestaltung zeichnet sich dadurch aus, dass die Schaufel eine quer zur Maschinenachse liegende Mittelebene aufweist, dass die Zuführbohrung auf der einen Seite der Mittelebene in den Aussenraum mündet, und dass das Versteifungselement symmetrisch zur Mittelebene ausgebildet ist und die Mündung der Zuführbohrung mit umschliesst. Insbesondere ist dabei das Versteifungselement als Plateau ausgebildet.

Gemäss einer weiteren Ausgestaltung der Erfindung erstreckt sich das Versteifungselement in Richtung der Längsachse der Schaufel über die gesamte Länge des Schaftes und weist eine näherungsweise trapezförmige Randkontur auf.

Vorzugsweise ist das Versteifungselement am Schaft der Schaufel angeformt und besteht aus demselben Material wie die Schaufel.

### Kurze Erläuterung der Figuren

Die Erfindung soll nachfolgend anhand von Ausführungsbeispielen im Zusammenhang mit der Zeichnung näher erläutert werden. Alle für das unmittelbare Verständnis der Erfindung nicht wesentlichen Elemente sind weggelassen worden. Gleiche Elemente sind in den verschiedenen Figuren mit den gleichen Bezugszeichen versehen. Die Figuren zeigen:
- Fig. 1: in einer Seitenansicht den unteren Teil einer Gasturbinenschaufel mit einem am Schaft angeordnetem Versteifungselement, gemäss einem Ausführungsbeispiel der Erfindung;
- Fig. 2: in Querschnitt die Umgebung einer am Schaft einer Schaufel vorgesehenen Zuführbohrung für Kühlluft, wie sie aus dem Stand der Technik bekannt ist; und
- Fig. 3: den Querschnitt durch das Versteifungselement der Fig. 1 in der dort gezeigten Ebene III-III.

### Wege zur Ausführung der Erfindung

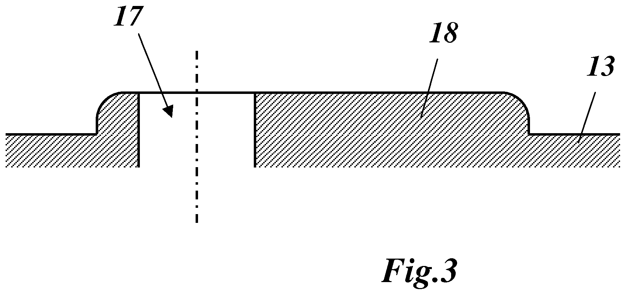

In Fig. 1 und 3 ist eine Schaufel gemäss einem Ausführungsbeispiel der Erfindung wiedergegeben. Die Schaufel 10, von der nur der untere Teil gezeigt ist, umfasst ein sich in Schaufellängsrichtung entlang einer Längsachse 19 erstreckendes Schaufelblatt 11. Das Schaufelblatt 11, das in Strömungsrichtung durch eine Vorderkante 15 und eine Hinterkante 16 begrenzt ist, geht am unteren Ende unterhalb einer die Innenwand des Heissgaskanals bildenden Plattform 12 in einen Schaft 13 über, der in einem üblichen Schaufelfuss 14 mit tannenbaumförmiger Querschnittskontur endet, mit dem die Schaufel 10 durch Einschieben in eine entsprechende axiale Nut an einem Schaufelträger, insbesondere einer Rotorscheibe, befestigbar ist (siehe z.B. Fig. 1 der eingangs zitierten US-A-4,940,388).

Im Inneren des Schaufelblattes 11 verlaufen zum Kühlen der Schaufel 10 nicht dargestellt Kühlkanäle, die über eine seitlich am Schaft 13 angeordnete Zuführbohrung 17 mit einem Kühlmedium, insbesondere Kühlluft, versorgt werden. Der Schaft 13 hat analog zum Schaufelblatt 11 eine konkave und eine konvexe Seite. In Fig. 1 ist die konvexe Seite dem Betrachter zugewandt. Die Zuführbohrung 17, die schräg nach oben in das Innere des Schaufelblattes 11 hineinläuft, mündet auf der konvexen Seite des Schaftes 13 in den Aussenraum.

Um nun die mit der Mündung der Zuführbohrung 17 verbundenen mechanischen Spannungen zu verringern und gleichzeitig das Schwingungsverhalten der Schaufel 10 positiv zu beeinflussen, ist um die Mündung der Zuführbohrung 17 herum ein über die unmittelbare Umgebung der Zuführbohrung 17 hinausreichendes, flächiges oder quasi-flächiges, also nicht durchwegs über die ganze Oberfläche flächlig ausgestaltet, Versteifungselement 18 vorgesehen, das am Schaft 13 integral angeformt ist und aus demselben Material besteht, wie die Schaufel 10. Wie aus dem in Fig. 3 gezeigten Querschnitt des Versteifungselements 18 zu erkennen ist, ist das Versteifungselement 18 als grossflächiges Plateau ausgebildet und reicht - von der links der Mittelebene 19 angeordneten Öffnung der Zuführbohrung 17 über die Mittelebene 19 der Schaufel 10 weit hinaus, so dass das Versteifungselement 18 symmetrisch zur Mittelebene 19 ausgebildet ist und die Mündung der Zuführbohrung 17 mit umschliesst.

In Richtung der Längsachse (19) der Schaufel 10 erstreckt sich das Versteifungselement 18 praktisch über die gesamte Länge des Schaftes 13. Es hat eine näherungsweise trapezförmige Randkontur, schliesst unmittelbar an die Unterseite der Plattform 12 an und weist auf der gegenüberliegenden Seite abgerundete Ecken auf.

Mit dem Versteifungselement 18 werden nicht nur Spannungsspitzen am Rand der Zuführbohrung 17 abgebaut, sondern es wird auch das Schwingungsverhalten der Schaufel 10 verbessert, da das Versteifungselement 18 auf der konvexen Seite des Schaufelfusses 13, 14 zu einer Erhöhung der natürlichen Frequenz des ersten Klappenschwingungsmodes der Schaufel 10 führt. Diese Erhöhung trägt dazu bei, eine Schaufel zu schaffen, die frei von Resonanzen mit den hauptsächlichen Anregungsmechanismen der Maschine ist.

Der herkömmliche Weg zur Erhöhung der ersten natürlichen Klappenschwingung würde darin bestehen, insgesamt die Dicke des Schaufelschaftes zu erhöhen. Dies würde jedoch zu einer erheblichen Erhöhung der Schaufelmasse führen. Ein anderer Weg bestünde darin, das Schaufelblatt oder das äussere Deckbandsegment zu verändern, was jedoch zu einer Verschlechterung der aerodynamischen Eigenschaften der Schaufel führen würde.

Die vorliegende Lösung mit dem lokalen, sorgfältig gestalteten Verstärkungselement auf der konvexen Seite des Schaftes verbessert das Schwingungsverhalten der Schaufel mit einem Minimum an Massenzuwachs und hält die mechanischen Spannungen an der Zuführbohrung für die Kühlluft niedrig.

### Bezugszeichenliste

- 10: Schaufel (Gasturbine)
- 11: Schaufelblatt
- 12: Plattform (innen)
- 13,20: Schaft
- 14: Schaufelfuss
- 15: Vorderkante
- 16: Hinterkante
- 17,21: Zuführbohrung (Kühlung)
- 18: Versteifungselement
- 19: Längsachse (Mittelebene)
- 22: Wulst

## Patentansprüche

1. Schaufel (10) für eine Gasturbine, umfassend ein sich in einer Schaufellängsrichtung (19) erstreckendes Schaufelblatt (11), welches am unteren Ende in einen Schaft (13) übergeht, der in einem Schaufelfuss (14) zur Befestigung der Schaufel (10) an einem Schaufelträger, insbesondere einer Rotorscheibe, endet, wobei im Inneren des Schaufelblattes (11) Vorrichtungen zum Kühlen der Schaufel (10) angeordnet sind, die über eine seitlich am Schaft (13) angeordnete Zuführbohrung (17) mit einem Kühlmedium, insbesondere Kühlluft, versorgbar sind, und **dadurch gekennzeichnet, dass** im Bereich der Zuführbohrung (17) mindestens ein Versteifungselement (18) zur Reduzierung von mechanischen Spannungen vorgesehen ist, wobei das Versteifungselement (18) sich um die Zuführbohrung (17) ausbreitet; wobei an der Grenze zwischen dem Schaft (13) und dem Schaufelblatt (11) eine Plattform (12) ausgebildet ist, und das Versteifungselement (18) unmittelbar an die Unterseite der Plattform (12) anschliesst und auf der gegenüberliegenden Seite abgerundete Ecken aufweist.

2. Schaufel nach Anspruch 1, **dadurch gekennzeichnet, dass** der Schaft (13) eine konkave und eine konvexe Seite aufweist, und dass die Zuführbohrung (17) auf der konvexen Seite des Schaftes (13) in den Aussenraum mündet.

3. Schaufel nach den Ansprüchen 1 und 2, **dadurch gekennzeichnet, dass** die Schaufel (10) eine quer zur Achse der Gasturbine liegende Mittelebene (19) aufweist, und dass die Zuführbohrung (17) auf der einen Seite der Mittelebene (19) in den Aussenraum mündet.

4. Schaufel nach den Ansprüchen 1 und 3, **dadurch gekennzeichnet, dass** das Versteifungselement (18) symmetrisch zur Mittelebene (19) ausgebildet ist und die Mündung der Zuführbohrung (17) mit umschliesst.

5. Schaufel nach einem der vorherigen Ansprüche, **dadurch gekennzeichnet, dass** das Versteifungselement (18) als Plateau ausgebildet ist.

6. Schaufel nach Anspruch 4 oder 5, **dadurch gekennzeichnet, dass** sich das Versteifungselement (18) in Richtung der Längsachse (19) der Schaufel (10) über die gesamte Länge des Schaftes (13) erstreckt und eine näherungsweise trapezförmige äußere Kontur aufweist.

7. Schaufel nach einem der Ansprüche 4 bis 6, **dadurch gekennzeichnet, dass** das Versteifungselement (18) am Schaft (13) der Schaufel (10) integral angeformt ist und aus demselben Material wie die Schaufel (10) besteht.

## Claims

1. Vane (10) for a gas turbine, comprising a vane blade (11) which extends in a vane longitudinal direction (19) and transforms at the lower end into a shaft (13) that ends in a vane root (14) for fixing the vane (10) to a vane carrier, in particular a rotor disc, wherein in the interior of the vane blade (11), devices are arranged for cooling the vane (10) and can be supplied with a cooling medium, in particular cooling air, via a supply bore (17) arranged laterally on the shaft (13), **characterised in that** in the region of the supply bore (17), at least one stiffening element (18) is provided for reducing mechanical stresses, wherein the stiffening element (18) widens out around the supply bore (17); wherein a platform (12) is formed at the interface between the shaft (13) and the vane blade (11), and the stiffening element (18) adjoins the underside of the platform (12) directly and has rounded corners on the opposite side.

2. Vane according to claim 1, **characterised in that** the shaft (13) has a concave and a convex side, and that the supply bore (17) opens into the exterior space on the convex side of the shaft (13).

3. Vane according to claims 1 and 2, **characterised in that** the vane (10) has a central plane (19) lying transversely to the axis of the gas turbine, and that the supply bore (17) opens into the exterior space on the one side of the central plane (19).

4. Vane according to claims 1 and 3, **characterised in that** the stiffening element (18) is formed symmetrically to the central plane (19) and also surrounds the opening of the supply bore (17).

5. Vane according to any of the preceding claims, **characterised in that** the stiffening element (18) is formed as a plate.

6. Vane according to claim 4 or 5, **characterised in that** the stiffening element (18) extends over the entire length of the shaft (13) in the direction of longitudinal axis (19) of the vane (10) and has an approximately trapezoid outer contour.

7. Vane according to any of claims 4 to 6, **characterised in that** the stiffening element (18) is moulded integrally onto the shaft (13) of the vane (10) and consists of the same material as the vane (10).

## Revendications

1. Aube (10) pour une turbine à gaz, comprenant une pale (11) s'étendant dans la direction longitudinale de l'aube (19), qui se transforme, au niveau de l'extrémité inférieure, en une tige (13), qui se termine dans un pied d'aube (14) pour la fixation de l'aube (10) à un support d'aube, plus particulièrement un disque de rotor, moyennant quoi, à l'intérieur de la pale (11), sont disposés des dispositifs de refroidissement de l'aube (10), qui peuvent être alimentés en air de refroidissement par l'intermédiaire d'un alésage d'alimentation (17) disposé latéralement sur la tige (13) et **caractérisée en ce que**, au niveau de l'alésage d'alimentation (17), se trouve au moins un élément de rigidification (18) pour la réduction des tensions mécaniques, l'élément de rigidification (18) s'élargissant autour de l'alésage d'alimentation (17) ; moyennant quoi, à la limite entre la tige (13) et la pale (11) est réalisée une plate-forme (12) et l'élément de rigidification (18) se raccorde directement au côté inférieur de la plate-forme (12) et comprend, sur le côté opposé, des angles arrondis.

2. Aube selon la revendication 1, **caractérisée en ce que** la tige (13) comprend un côté concave et un côté convexe, et **en ce que** l'alésage d'alimentation (17) débouche sur le côté convexe de la tige (13) dans l'espace extérieur.

3. Aube selon les revendications 1 et 2, **caractérisée en ce que** l'aube (10) comprend un plan central (19) transversal à l'axe de la turbine à gaz et **en ce que** l'alésage d'alimentation (17) débouche sur un côté du plan central (19) dans l'espace extérieur.

4. Aube selon les revendications 1 à 3, **caractérisée en ce que** l'élément de rigidification (18) est conçu de manière symétrique par rapport au plan central (19) et entoure l'embouchure de l'alésage d'alimentation (17).

5. Aube selon l'une des revendications précédentes, **caractérisée en ce que** l'élément de rigidification (18) est conçu comme un plateau.

6. Aube selon la revendication 4 ou 5, **caractérisée en ce que** l'élément de rigidification (18) s'étend en direction de l'axe longitudinal (19) de l'aube (10) sur toute la longueur de la tige (13) et présente un contour externe approximativement trapézoïdal.

7. Aube selon l'une des revendications 4 à 6, **caractérisée en ce que** l'élément de rigidification (18) est formé de manière intégrale sur la tige (13) de l'aube (10) et est constitué du même matériau que l'aube (10).
